Europäisches Patentamt

European Patent Office

Office européen des brevets

(19)

(11) Publication number: **0 047 805**

**A1**

(12) # EUROPEAN PATENT APPLICATION

(21) Application number: **80303251.5**

(22) Date of filing: **16.09.80**

(51) Int. Cl.³: **F 16 G 5/08**

(43) Date of publication of application:
**24.03.82 Bulletin 82/12**

(84) Designated Contracting States:
**AT CH DE FR GB IT LI NL SE**

(71) Applicant: **MITSUBOSHI BELTING LTD.**
**No. 1-21, Hamazoedori 4-Chome Nagata-ku**
**Kobe-shi Hyogo(JP)**

(72) Inventor: **Imamura, Junji**
**No.501-20,Minbudani Shioya-cho**
**Tarumi-ku Kobe-shi Hyogo(JP)**

(74) Representative: **Cooper, Derek Robert et al,**
**MARKS & Clerk Alpha Tower ATV Centre**
**Birmingham B1 1TT(GB)**

(54) **Power transmission belts.**

(57) A plurality of V-belt bodies disposed side-by-side are connected together over their radially outer surfaces by a tie band (T) which includes at least one ply of rubbered fabric (5). The fabric (5) is formed from crimped nylon yarns (5a) subjected to woolly treatment extending parallel to the longitudinal axis of the belt interwoven with cotton yarns, nylon yarns or polyester yarns (5b) extending at right angles to said longitudinal axis. This makes the tie band (T) and hence the whole belt relatively stretchable in the longitudinal direction but comparatively rigid in the lateral direction, ensuring good conformability of the belt to the pulley grooves in which it runs. In order to reduce the risk of the crimped nylon yarns (5a) fraying out of the tie band (T), the fabric can be arranged so that these yarns are inclined to the longitudinal axis of the belt at an angle between 0° and 40°. Each V-belt body can be covered by a rubbered bias fabric (3) over the whole of its external surface, or only a radially inner surface thereof can be covered by the fabric (3) so that side surfaces thereof are exposed.

FIG. 1

This invention relates to power transmission belts adapted to transmit power from one pulley to another. The invention is intended to overcome the difficulties inherent in so-called "multi-V-belts" which are adapted to transmit large torques from a driving pulley to a driven pulley. These difficulties include vibration and turn-over which are often caused during running of the belt. This invention also aims to eliminate power transmission loss due to the non-uniformity in length of the belt elements forming the multi-V-belt, and to increase the service life of the belt.

In a conventional multi-V-belt drive system, a plurality of belts are laid over pulleys having a plurality of pulley grooves in such a manner that each belt engages a respective one of the pulley grooves. In the case where the multi-V-belt system is employed for driving a machine such as a crusher or a compressor which generates a relatively great impact load, the belts are liable to be vibrated separately and to be brought into contact with one another. As a result the belts may be turned over or may come off the pulleys, and may be prematurely damaged. A V-belt is driven through friction, and therefore it is necessary to apply a suitable tension to the belt before it is run. However, in the conventional multi-V-belt system the belts are liable to be non-uniform in tension because their lengths are not uniform, and as a result the belts are vibrated and the service lives thereof are shortened.

In order to overcome these difficulties, a power transmission belt has been proposed in which the upper surfaces of individual V-belt bodies are connected with a tie-band formed with a wide cross angle fabric. Because wide cross angle fabric is used, the belt is high in lengthwise stretchability because the angle in the widthwise direction is smaller. Accordingly, the belt cannot satisfactorily engage with the pulley, and the
tie band is liable to peel off the belt.   Thus, the
proposed belt is still disadvantageous.

A power transmission belt using a nylon cord fabric
as its tie band is also known in the art.   This belt has
excellent stretchability in the longitudinal direction.
However, when the belt is used with a small diameter pulley,
the rubber interposed between the cords of the fabric
is excessively stretched and accordingly is liable to
become cracked.   Since nylon cord fabric is used, the
stretchability of the belt in the lateral direction is
low, and therefore the belt cannot suitably engage the
pulley.

It is an object of the present invention to obviate
or mitigate the above-described difficulties accompanying
conventional power transmission belts, and to provide a
power transmission belt having a tie band which is
stretchable only in the longitudinal direction.

According to the invention , the tie band includes
at least one layer of fabric composed of yarns high
in stretchability which extend generally longitudinally
of the belt interwoven with yarns high in rigidity which
extend transversely of the belt.

The yarns high in stretchability are preferably
crimped nylon yarns subjected to woolly treatment, whereas
the yarns high in rigidity can be cotton yarns, nylon
yarns or polyester yarns.   The yarns high in stretchability
advantageously form an angle of between $0^{o}$ and $40^{o}$ with the
longitudinal axis of the belt.   The fabric can be a plain
weave fabric or a twill weave fabric.

The present invention will now be further described,
by way of example, with reference to the accompanying
drawings, in which:-

Figures 1 and 2 are perspective views, partly cut away, of two embodiments of a power transmission belt according to the present invention;

Figure 3 is a plan view of a fabric which forms part of a tie band of the belts shown in Figures 1 and 2;

Figure 4 is a diagram indicating one way in which the fabric shown in Figure 3 can be woven;

Figures 5 and 6 illustrate one manner in which the fabric shown in Figure 3 can be produced;

Figures 7 and 8 illustrate the manner of production of an alternative form of fabric;

Figure 9 is a perspective view, partly cut away, of a third embodiment of a power transmission belt according to the present invention which utilises the fabric shown in Figures 7 and 8;

Figure 10 is a plan view of a further alternative form of fabric which can be used in the tie band; and

Figure 11 illustrates a method of winding the fabric shown in Figure 10 around V-belt bodies of the power transmission belt.

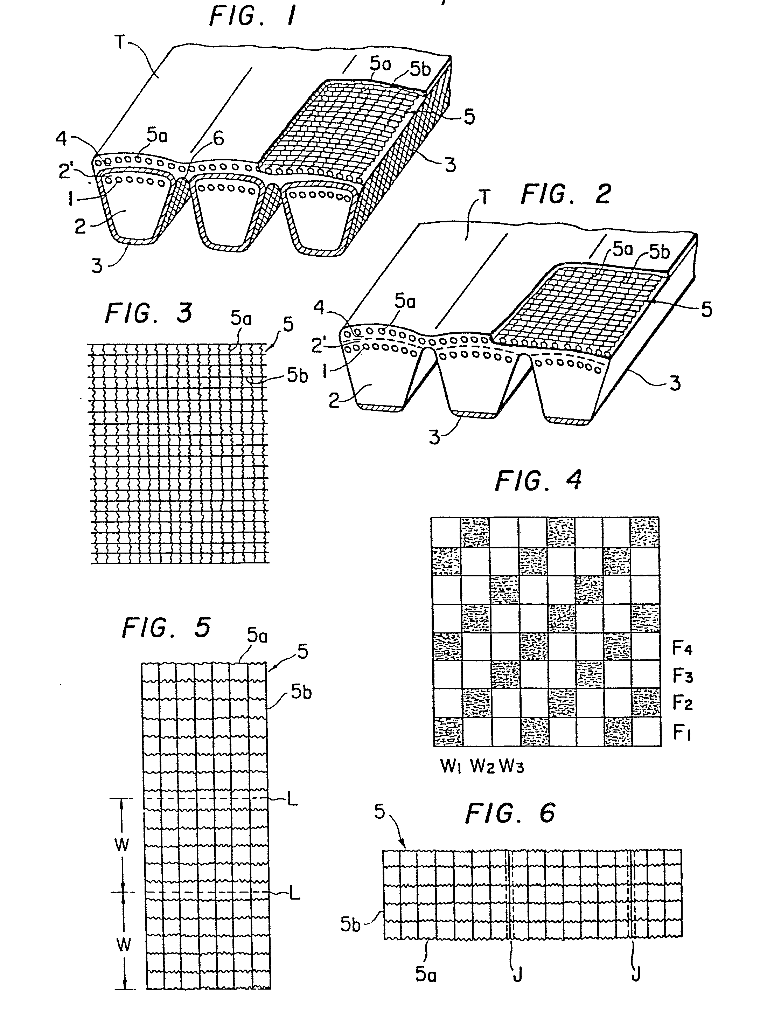

Referring first to Figure 1, the power transmission belt shown therein comprises a plurality of V-belt bodies disposed side-by-side and whose radially outer surfaces are joined together by a tie band T. Each V-belt body includes a layer 1 of tensile members made of a rope of fibres such as polyester fibres, nylon fibres, rayon fibres, or aromatic polyamide fibres ("Kevlar") which are high in strength. A compression rubber layer 2 is provided inwardly of the layer 1, while a core rubber layer 2' is provided outwarly thereof. The external surface of each V-belt body is covered by a rubbered bias fabric 3 made of cotton yarns. Thus, each V-belt body takes the form of an ordinary wrapped V-belt.

The tie band T is obtained by covering the upper and lower surfaces of a stretchable fabric 5 with rubber 4 so as to form a unitary structure. More particularly, in order to improve its stretchability in the longitudinal direction and its rigidity in the lateral direction of the belt, the tie band T is manufactured by weaving the fabric 5 from warps 5a comprising stretchable crimped nylon yarns subjected to woolly treatment and wefts 5b comprising cotton yarns, nylon yarns or polyester yarns. high in rigidity, the fabric 5 then being embedded in the flexible rubber 4 which is equal in quality to the rubber of the layers 2 and 2' in the V-belt bodies. In the finished belt, the crimped nylon yarns subjected to woolly treatment extend parallel to the longitudinal axis of the belt, while the cotton yarns, nylon yarns or polyester yarns extend at right-angles to said longitudinal axis.

An ordinary plain weave fabric which is stretchable only in the longitudinal direction of the belt may be employed in the tie band T. However, it is preferred to employ a twill weave fabric for the following reason. In a twill weave fabric, the warps 5a and wefts 5b each have at least three yarns interlaced with one another to show diagonal lines on the surface. The warps 5a and wefts 5b form wavy cross-points every two yarns, and therefore the number of wavy cross-points in the twill weave fabric is much smaller than that in the ordinary plain weave fabric. Accordingly, it is possible to fill the spaces between the yarns at the cross points sufficiently with the rubber 4 and thereby prevent the warps 5a and the wefts 5b from coming into contact with one another when the belt is bent. This results in an improvement in the service life of the belt.

Figures 3 and 4 show one example of a fabric which can be used in the tie band of the power transmission belt described above. In this fabric, warps 5a made of crimped nylon yarns made stretchable through woolly treatment and wefts 5b made of ordinary nylon yarns, cotton yarns or polyester yarns are woven in a twill weave pattern. As shown in Figure 4, in the woven pattern a first warp W1 appears over a weft F1, then disappears under the next two wefts F2 and F3, and then appears over the fourth
weft F4. A second warp W2 next to the warp W1 disappears
under the weft F1 appears over the next weft F2 and
disappears under the wefts F3 and F4. A third warp W3 next
to the warp W2 disappears under the wefts F1 and F2 and
then appears over the weft F3; and so forth. If this
woven pattern is viewed from the point of the wefts,
the weft F1 disappears under the warp W1 and then appears
over the warps W2 and W3. The weft F2 appears over the
warp W1, then disappears under the warp W2, and appears
over the warps W3 and W4. The third weft F3 appears over
the warps W1 and W2 and then disappears under the warps
W3; and so forth. Since the warps and the wefts are
interlaced with one another in this way, the positions
of the visible warps and wefts move stepwise diagonally
across the fabric. As a result a woven pattern having
oblique lines running across the fabric is defined.

With respect to the connection of the tie band T
made of the fabric shown in Figures 3 and 4 to the V-belt
bodies, it is unnecessary to arrange for the tie band T
to have a wide angle (unlike in a conventional power
transmission belt) because the warps 5a which run generally
longitudinally of the belt have been treated so as to be
stretchable. That is, as shown in the cut-away part
of Figure 1, the relatively rigid wefts 5b form an angle
of 90° with the longitudinal axis of the belt.

The tie band T may be bonded to the V-belt bodies
with an adhesive because the rubber 4 incorporating the
stretchable fabric 5 is equal in quality to the rubbers 2
and 2' of the V-belt bodies. However, it is advisable
for the tie band and the V-belt bodies to be combined
together strongly as one unit in the process of
vulcanization. In addition, it is preferable that a U-
shaped thin groove 6 be formed between adjacent V-belt
bodies and in the radially inner surface of the tie band T.

Figure 2 shows a second embodiment of a power
transmission belt, in which the structure of the tie
band T and the connection of the tie band to the V-belt
bodies are similar to the belt shown in Figure 1.
However, in the belt shown in Figure 2, only the radially
inner surface of each V-belt body is covered with a
rubbered bias fabric 3: thus, the sides thereof are not
covered with the fabric so that the rubber is exposed at
these points.   The power transmission belt shown in
Figure 2 can thus be regarded as a plurality of raw edge
type V-belts connected together by a tie band.   Since
the side of the V-belt bodies are not covered by the
fabric 3, their coefficient of friction is higher than
that of the wrapped V-belt bodies shown in Figure 1,
and accordingly the power transmission performance of the
belt is higher.

In the above-described examples, only one ply of
stretchable fabric 5 is employed in the tie band;
however, it should be noted that the invention is not
limited thereto or thereby.   That is, two or more plys
of stretchable fabric can be used for forming the tie band
depending on requirements of actual use.

In summary, the power transmission belts described
above comprise a plurality of V-belt bodies connected
together by a tie band which is obtained by embedding
a particular fabric in rubber, the fabric being woven from
warps of stretchable crimped yarn   subjected to woolly
treatment and wefts of/nylon yarn or polyester yarn,such
cotton yarn,
that the number of cross points between the warps and
wefts is small.   The fabric is oriented so that the
wefts form an angle of 90$^{\circ}$ with the longitudinal axis of
the belt.   Accordingly, when compared with a conventional
multi-V-belt or a conventional multi-rib belt obtained
by connecting V-belt bodies with a tie band, the stretchability of the power transmission belt according to the
invention in the longitudinal direction is considerably high.   With the power transmission belt according
to the invention, problems such as vibration, turn-over
and removal which occur frequently with conventional
power transmission belts can effectively be prevented,
the belt life is increased, and the power transmission
performance is improved.

Power transmission belts are greatly affected
by the conditions in which they are used, and
especially by heat and water: sometimes the width of
the belt is changed by these factors, as a result of
which the belt cannot satisfactorily engage the pulley.
However, this difficulty is effectively eliminated by
the power transmission belt of the invention, because
the wefts 5b are cotton yarns, nylon yarns or polyester
yarns high in rigidity.

A method of producing the fabric for incorporation
in the tie band T will now be described with reference
to Figures 5 and 6.   As shown in Figure 5, a plain
weave fabric or a twill weave fabric is initially produced
by weaving wefts 5a made of crimped nylon yarn subjected
to woolly treatment and warps 5b made of cotton yarn,
nylon yarn or polyester yarn.   The fabric 5 thus
obtained is cut along lines L parallel to the wefts 5a
into several pieces of equal width W, these pieces then
being connected together along lines J as indicated in
Figure 6 to form a long fabric.   The wefts 5a of the
original fabric now extend in the longitudinal direction
and the warps 5b extend in the lateral direction of the
fabric.   The long fabric 5 thus obtained is embedded
in the connecting rubber 4 of the tie band T in such a
manner that the crimped nylon yarns 5a subjected to woolly
treatment extend in the lengthwise direction of the belt,
and the cotton yarns, nylon yarns or polyester yarns 5b
extend in the widthwise direction of the belt.   Accordingly,
the stretchability in the longitudinal direction of the
belt is improved, and changes in the widthwise dimension of the belt can to a certain extent be limited.

The wefts 5b of the fabric embedded in the rubber
4 must be yarns such as cotton yarns, nylon yarns or
polyester yarns which are low in stretchability but high
in rigidity.  If the yarns are excessively stretchable
or cannot stretch at all, the belt cannot satisfactorily
engage the pulley.  Therefore, in order to permit the
belt to engage the pulley sufficiently,.the yarn must have
a suitable stretchability.  In view of this, the most
suitable nylon yarns are thosewhich are stretched by a
relatively large amount by heat generated during running
of the belt.

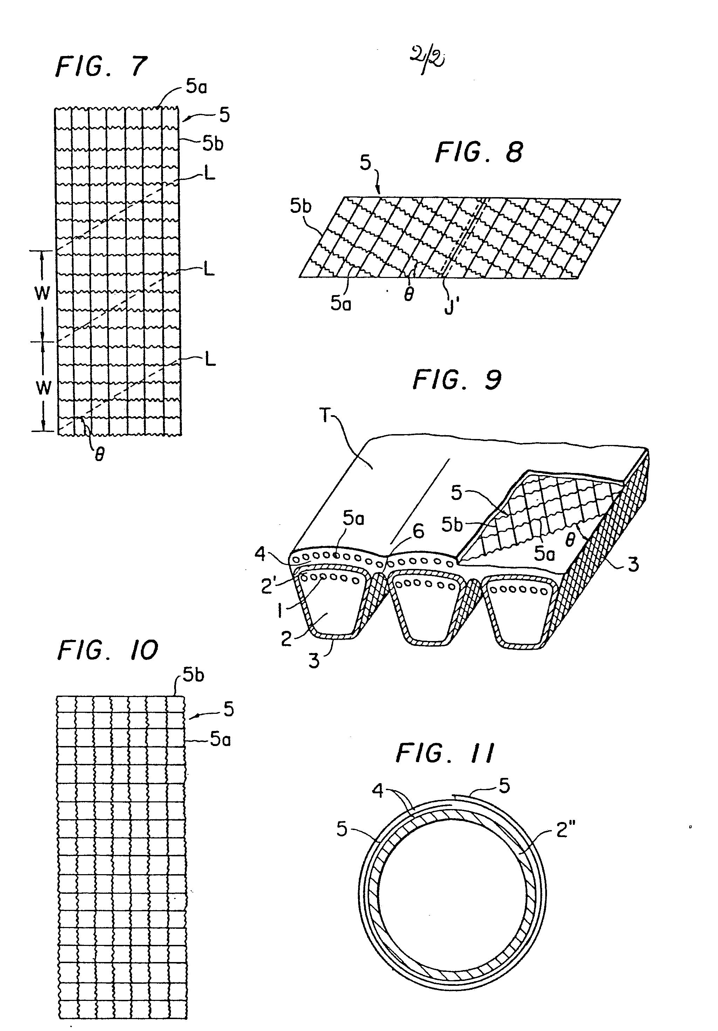

In both of the above-described embodiments, the plain
weave fabric or twill weave fabric is embedded in the
rubber 4 of the tie band T in such a manner that the
wefts 5b are at right-angles to the lengthwise direction
of the belt.  That is, the warps 5a are exposed on the
sides of the tie band T and are therefore liable to be
frayed out of the sides thereof.  This difficulty can be
overcome by arranging the fabric 5 in such a manner that
the direction of extent of the warps is oblique with
respect to the longitudinal axis of the belt as indicated
in Figure 9.

Figures 7 and 8 illustrate one way in which the fabric
5 shown in Figure 9 can be produced.  Referring to Figure 7,
a plain weave or twill weave fabric is first obtained by
weaving wefts 5a of  crimped nylon yarn and warps 5b of
cotton yarn, nylon yarn or polyester yarn, similarly as in
the case of Figure 5.  The fabric is then cut along lines
L whichare inclined at an angle θ to the wefts 5a into several
pieces of fabric having the same width W.  These pieces
of fabric are connected together along lines J as shown in
Figure 8 to form a long fabric in which the wefts 5a are
inclined at an angle θ to the lengthwise direction of
the fabric.  The long fabric thus formed is embedded in the rubber layer 4 of the tie band T, with the result that the wefts 5a (which are made of stretchable nylon yarn subjected to woolly treatment) form an angle θ with the longitudinal axis of the belt.

The angle θ is in general arranged to be between 0 to 40 degrees.   If the angle θ is larger than 40 degrees, then the direction of extent of the stretchable wefts 5a approaches the widthwise direction of the belt.   As a result, the stretchability in the lengthwise direction of the belt is decreased, and the width of the belt is subject to dimensional changes, thus making engagement of the belt with the pulley unsatisfactory.

The modified long fabrics shown in Figures 6 and 8 are obtained by cutting an original woven fabric laterally or obliquely into several pieces, and joining these pieces of fabric together in a different arrangement.   The places where these pieces are joined together (i.e. along the lines J or J') are therefore thicker than the remainder of the fabric.   Accordingly, when the long fabric is embedded in the rubber 4 of the tie band T, the thickness of the tie band T becomes non-uniform, which may cause the belt to vibrate during running thereof.   This difficulty can be eliminated by using a plain weave fabric or a twill weave fabric which is obtained by weaving warps 5a of crimped nylon yarn subjected to woolly treatment and wefts 5b of cotton yarn, nylon yarn or polyester yarn in the manner shown in Figure 10.   Unlike the fabrics shown in Figures 6 and 8, it is unnecessary to cut the fabric into several pieces and to join these pieces together again. In other words, the fabric 5 can be used as it  is.

When only a single ply of fabric 5 is embedded in the rubber 4 of the tie band, no joints are created. In the case where at least two plys of fabric 5 are embedded in the tie band, if as shown in Figure 11 the fabric 5 with a thin rubber layer 4 bonded thereto is wound spirally around the radially outer surfaces of a plurality of V-belt bodies 2", then unlike the cases of Figures 6 and 8 no joints are created in the fabric. Therefore, if the fabric is spirally wound in succession in this manner, a belt having a uniform thickness can be obtained.

As is apparent from the above description, power transmission belts according to the present invention are obtained by connecting together the radially outer surfaces of a plurality of V-belt bodies using a tie band in which a fabric stretchable in the longitudinal direction and rigid in the lateral direction is embedded. The resulting power transmission belt has the following merits:

(1) Since a plain weave fabric or twill weave fabric is used in which crimped nylon yarns subjected to woolly treatment are employed as warps, the stretchability of the belt is excellent when compared with conventional multi-V-belts or conventional power transmission belts obtained by connecting V-belt bodies with a tie band. It is possible to prevent the belt from vibrating, turning over, and coming off the pulley. In addition, the service life and the power transmission performance of the belt can be increased.

(2) Since a plain weave fabric or twill weave fabric obtained by weaving warps of crimped nylon yarn subjected to woolly treatment and wefts of cotton yarn, nylon yarn or polyester yarn high in rigidity and low in stretchability is arranged in the tie band in such a manner that the stretchable warps extend in the lengthwise direction of the belt, the flexibility of the belt is increased in the longitudinal direction of the latter. The width of the belt does not change significantly under undesirable conditions such as the presence of heat or water, and therefore the belt can be satisfactorily engaged with the pulley at all times.

C L A I M S :

1. A power transmission belt comprising a plurality of V-belt bodies at least the radially inner surfaces of which are covered by a rubbered bias fabric, the V-belt bodies being arranged side-by-side and being connected together on their radially outer surfaces by a tie band, characterised in that the tie band (T) includes at least one ply of rubbered stretchable fabric (5).

2. A power transmission belt as claimed in claim 1, wherein each of the V-belt bodies is covered by the rubbered bias fabric (3) over the whole of its external surface.

3. A power transmission belt as claimed in claim 1, wherein each of the V-belt bodies is covered by the rubbered bias fabric (3) over only its said radially inner surface, so that side surfaces thereof are exposed.

4. A power transmission belt as claimed in claim 1,2 or 3, wherein the tie band (T) includes more than one ply of said rubbered stretchable fabric (5).

5. A power transmission belt as claimed in claim 4, wherein said rubbered stretchable fabric (5) is wound spirally around the belt to form said more than one ply.

(3) By embedding the fabric in the rubber layer of the tie band in such a manner that the warps form an angle of 0 to 40 degrees with the longitudinal direction of the belt, it is possible to prevent the warps from being frayed out of the belt.

(4) A plain weave fabric or twill weave fabric obtained by weaving warps of crimped nylon yarn.subjected to woolly treatment and wefts of cotton yarn, nylon yarn or polyester yarn can be used as it is in the tie band. Since such a fabric has no joint parts, the tie band is uniform in thickness and thus vibration of the belt can positively be prevented.

6. A power transmission belt as claimed in any preceding claim, wherein said rubbered stretchable fabric (5) comprises crimped nylon yarns subjected to woolly treatment extending generally longitudinally of the belt interwoven with cotton yarns, nylon yarns or polyester yarns extending transversely of said belt.

7. A power transmission belt as claimed in claim 6, wherein said crimped nylon yarns subjected to woolly treatment are inclined to the longitudinal axis of said belt at an angle of between $0^o$ and $40^o$.

8. A power transmission belt as claimed in claim 6, wherein said crimped nylon yarns subjected to woolly treatment extend parallel to the longitudinal axis of said belt, and said cotton yarns, nylon yarns or polyester yarns extend at right-angles to said longitudinal axis.

9. A power transmission belt as claimed in claim 6, 7 or 8, wherein said crimped nylon yarns subjected to woolly treatment form the wefts of the rubbered stretchable fabric (5) and said cotton yarns, nylon yarns or polyester yarns form the warps thereof.

10. A power transmission belt as claimed in claim 6, 7 or 8, wherein said crimped nylon yarns subjected to woolly treatment form the warps of the rubbered stretchable fabric (5) and said cotton yarns, nylon yarns or polyester yarns form the wefts thereof.

11. A power transmission belt as claimed in any one of claims 1 to 10, wherein the rubbered stretchable fabric (5) is a plain weave fabric.

12.    A power transmission belt as claimed in any one of claims 1 to 10, wherein the rubbered stretchable fabric (5) is a twill weave fabric.

13.    A power transmission belt comprising a plurality of V-belt bodies at least the radially inner surfaces of which are covered by a rubbered bias fabric, the V-belt bodies being arranged side-by-side and being connected together on their radially outer surfaces by a tie band which includes at least one layer of fabric, characterised in that said fabric (5) is composed of yarns (5a) high in stretchability extending generally longitudinally of the belt interwoven with yarns (5b) high in rigidity extending transversely of the belt.

FIG. 1

FIG. 2

FIG. 3

FIG. 4

F4
F3
F2
F1

W1 W2 W3

FIG. 5

FIG. 6

FIG. 7

FIG. 8

FIG. 9

FIG. 10

FIG. 11

## European Patent Office

## EUROPEAN SEARCH REPORT

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| | EP - A - 0 009 389 (MITSUBOSHI BELTING) <br><br> * Figures 1 and 2; page 4, line 32 until page 8, line 5, all claims * <br><br> --- | 1-4,6, 9,10 | F 16 G  5/08 |
| | US - A - 3 564 933 (DAYCO CORP.) <br><br> * The whole document * <br><br> --- | 1,2,4, 6,7,11 | |
| | EP - A - 0 014 561 (MITSUBOSHI BELTING) <br><br> * The whole document * <br><br> --- | 6-13 | TECHNICAL FIELDS SEARCHED (Int. Cl.³) <br><br> B 29 H <br> F 16 G |
| | FR - A - 2 445 912 (DAYCO CORP.) <br><br> * Figures 11 and 12; page 6, line 35 until page 7, line 12 * <br><br> --- | 2,3,5 | |
| | US - A - 4 011 766 (DAYCO CORP.) <br><br> * Figures 1 and 3; column 2, line 52 until column 3, line 10 * <br><br> --- | 3,4,8, 11 | |
| | US - A - 3 853 017 (DAYCO CORP.) <br><br> * Figures 1 and 5; column 4, lines 20 until 35 * <br><br> --- | 2,4 | |
| | DE - A - 2 145 854 (NAUTSCHNO-ISSLE DOWATELSKY INSTITUT RESINO-WOJ PROMYSCHLERNOSTI SAGORSKY FILIAL) <br><br> * Figures 1 until 4; the claim * <br><br> --- | 5 | CATEGORY OF CITED DOCUMENTS |
| | DE - C - 561 127 (KARL SCHEITINGER) <br><br> * The whole document * <br><br> --- ./.. | 5 | X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| The present search report has been drawn up for all claims |||
|---|---|---|
| Place of search <br> The Hague | Date of completion of the search <br> 14-05-1981 | Examiner <br> JAIK |

## EUROPEAN SEARCH REPORT

European Patent Office

### DOCUMENTS CONSIDERED TO BE RELEVANT

| Category | Citation of document with indication, where appropriate, of relevant passages | Relevant to claim |
|---|---|---|
| A | GB - A - 761 410 (THE DAYTON RUBBER COMPANY) <br> * Figure 1; page 3, lines 9-14 * | 1 |
| A | US - A - 3 872 735 (HOXTERSCHE GUMFADEN-FABRIK EMIL ARNTZ) <br> * Column 1, lines 18-23 * | |

CLASSIFICATION OF THE APPLICATION (Int. Cl.³)

TECHNICAL FIELDS SEARCHED (Int. Cl.³)